# FASCICULE DE BREVET EUROPEEN

(11) **EP 4 265 159 B1**
(45) Date de publication et mention de la délivrance du brevet: **17.06.2026**
(21) Numéro de dépôt: 23168288.1
(22) Date de dépôt: 17.04.2023
(51) Int. Cl.: A47J 36/06, A47J 27/00, A47J 36/38

(54) **APPAREIL DE CUISSON À CONTROLE D'ÉCHAPPEMENT**
GARGERÄT MIT ABGASÜBERWACHUNG
COOKING APPLIANCE WITH EXHAUST CONTROL

(30) Priorité: 20.04.2022 FR 2203660
(43) Date de publication de la demande: 25.10.2023
(73) Titulaire: SEB S.A., 69130 Ecully (FR)
(72) Inventeur: BLANC, Hervé Eugène René, 69134 Ecully Cedex (FR); BOUYE, Nathalie, 69134 Ecully Cedex (FR)
(74) Mandataire: SEB Développement

(56) Documents cités:
- EP-A1- 3 100 652
- CN-A- 111 035 244
- KR-A- 20200 090 604
- US-A1- 2003 121 921

## Description

La présente invention se rapporte au domaine technique général des appareils de cuisson d'aliments dans une atmosphère chargée en vapeur, de préférence à usage domestique, et en particulier aux appareils du genre marmites, cocottes, faitouts, cuiseurs-vapeur ou encore aux appareils « *deux-en-un* » utilisables alternativement en mode autocuiseur (sous pression) et en mode faitout (à pression atmosphérique).

La présente invention concerne plus particulièrement un appareil de cuisson d'aliments comprenant au moins d'une part un premier couvercle et d'autre part une cuve sur laquelle ledit premier couvercle est destiné à reposer librement pour former une enceinte de cuisson.

Les faitouts sont des ustensiles de cuisson bien connus, qui se présentent sous la forme d'une marmite avec une cuve et un couvercle destiné à venir reposer librement sur cette dernière pour former une enceinte de cuisson destinée à accueillir les aliments à cuire. Les faitouts sont destinés à être chauffés au moyen d'une plaque de cuisson, mais peuvent également le cas échéant passer au four.

Il est fréquent d'introduire un volume de liquide (souvent aqueux) relativement conséquent dans le faitout pour assurer la cuisson des aliments qu'il contient. Lors de la cuisson, le liquide est porté à ébullition et se transforme alors en vapeur qui s'échappe, pendant la cuisson, à l'extérieur de l'enceinte, en passant entre la cuve et le couvercle. Si la vapeur, à peine échappée, vient frapper une surface proche de la zone d'échappement, elle peut se condenser sur cette surface sous la forme de gouttelettes d'eau qui viennent mouiller la surface en question. C'est pourquoi les poignées équipant les cuves des faitouts présentent généralement un agencement spécifique visant à éviter la condensation de vapeur sur leur surface, qui les rendrait glissantes et inconfortables à utiliser.

Afin de tenter de surmonter ce problème de condensation de vapeur sur les poignées des faitouts connus, différentes conceptions ont été proposées.

On connaît ainsi des faitouts pourvus de poignées qui s'étendent sensiblement horizontalement en-deçà du bord supérieur de la cuve, de façon à ne pas être exposées à la vapeur s'échappant hors de l'enceinte. En effet, en raison de sa température élevée, la vapeur qui s'échappe à l'interface entre le couvercle et la cuve s'élève verticalement dès sa sortie de l'enceinte, de sorte qu'elle ne peut pas venir frapper les poignées du fait de leur positionnement spécifique en-deçà du bord de cuve. Toutefois, ce positionnement des poignées n'est pas optimal en termes d'ergonomie, ainsi que de facilité et de sécurité d'utilisation. En particulier, la prise procurée par ces poignées horizontales peut présenter une certaine instabilité lorsque la cuve est remplie, en raison du placement des poignées sous le bord de cuve. Ce positionnement spécifique des poignées constitue en outre une contrainte importante pour la fabrication industrielle et l'aspect esthétique général (« *design* ») du faitout.

Afin de procurer une prise plus ergonomique et stable, il est alternativement connu de recourir à des poignées qui s'élèvent à une altitude supérieure à celle du bord supérieur de la cuve, mais qui présentent dans ce cas une forme extrêmement longiligne et très ouverte, c'est-à-dire en forme d'anse, pour tenir autant que possible à distance du flux de vapeur s'échappant hors de l'enceinte la surface utile de la poignée destinée à être saisie à la main et ainsi exposer une surface minimum au flux de vapeur. Une telle conception conduit cependant à un encombrement conséquent de l'appareil de cuisson, qui en complique le stockage et le rangement. La fabrication peut également être plus complexe, car ces poignées de forme très ouverte et longiligne peuvent être difficiles, sinon impossible, à fabriquer par moulage d'un matériau métallique d'une seule pièce avec la cuve. Il est donc dans ce cas nécessaire de prévoir une fixation alternative, qui peut être par exemple un rivetage, ce qui complexifie la fabrication industrielle et en augmente le coût. Le recours à une poignée en forme d'anse induit en outre des contraintes de fabrication spécifiques qui sont absentes de la fabrication de pièces pleines et massives.

Les conceptions connues exposées ci-avant permettent de réduire le phénomène de condensation sur les poignées de cuve, sans pour autant le faire disparaître totalement pour autant, et au prix des contraintes et inconvénients significatifs rappelés dans ce qui précède.

Afin de minimiser le phénomène de condensation sur les poignées, ces dernières sont généralement réalisées en un matériau métallique. De ce fait, les poignées sont susceptibles de monter rapidement en température sous l'effet du chauffage de la cuve dont elles sont issues (poignées moulées d'une seule pièce avec la cuve) ou avec laquelle elles viennent en contact (poignées rivetées sur la cuve). La température élevée atteinte par les poignées réduit le risque de condensation de la vapeur sur les poignées. Le recours à des poignées métalliques présente toutefois des inconvénients en ce qui concerne le confort et la sécurité d'utilisation. En effet, la température élevée atteinte par les poignées, si elle permet de limiter une éventuelle condensation de vapeur, empêche l'utilisateur de les saisir directement à pleines mains, sauf à se brûler. Il est donc nécessaire d'utiliser des linges de protection (maniques) pour attraper les poignées sans se brûler afin de déplacer la cuve. Le recours à des maniques constitue une contrainte d'utilisation supplémentaire. Il accroît en outre le risque de voir la poignée échapper par inadvertance, notamment lorsque la poignée présente une forme d'anse, car la manique peut masquer l'ouverture de l'anse, rendant plus difficile pour l'utilisateur d'appréhender la forme de la poignée et de la saisir de façon parfaitement sûre et adéquate.

Afin de remédier aux différents inconvénients susvisés, et permettre en particulier le recours à une conception de poignée moins contrainte, il est par ailleurs connu de recourir à un couvercle percé d'un orifice ménagé dans la paroi supérieure du couvercle pour permettre un échappement de vapeur vertical. La réalisation d'un tel orifice de fuite est toutefois elle-même source de complexité et d'inconvénients. La réalisation de cet orifice nécessite en effet des opérations de fabrication supplémentaires, qui peuvent s'avérer délicates à mettre en œuvre et induire des amorces de fragilisation du couvercle. Tel est le cas en particulier lorsque le couvercle est réalisé en un matériau fragile comme la fonte émaillée ou le verre. De plus, la mise en œuvre d'un tel orifice localisé, qui assure à lui seul l'échappement de toute la vapeur contenue dans l'enceinte, conduit, notamment lorsqu'une puissance de chauffe importante est mise en œuvre, à la génération d'un jet de vapeur rapide et puissant vers le haut qui est source d'inconfort, voire d'insécurité, pour l'utilisateur. Ce jet de vapeur occasionne en outre des pertes thermiques qui peuvent être importantes.

Le document CN-111 035 244 A décrit un appareil de cuisson dont le couvercle est muni de bossages 6 pour ménager un espace libre d'échappement de vapeur.

Les objets assignés à la présente invention visent par conséquent à remédier aux différents inconvénients énumérés précédemment et à proposer un nouvel appareil de cuisson d'aliments qui, tout en étant de construction particulièrement simple, fiable et limitant les pertes thermiques, présente une conception minimisant le risque de condensation de vapeur sur les poignées de cuve, indépendamment de la forme, du positionnement et du matériau constitutif de ces dernières.

Un autre objet de l'invention vise à proposer un nouvel appareil de cuisson d'aliments de construction particulièrement compacte et légère.

Un autre objet de l'invention vise à proposer un nouvel appareil de cuisson d'aliments à la fois particulièrement robuste et facile à utiliser.

Un autre objet de l'invention vise à proposer un nouvel appareil de cuisson d'aliments dont la conception facilite la fabrication industrielle et autorise une grande liberté de design.

Un autre objet de l'invention vise à proposer un nouvel appareil de cuisson d'aliments dont la conception permet d'éviter tout risque de montée en pression intempestive de l'enceinte de cuisson.

Un autre objet de l'invention vise à proposer un nouvel appareil de cuisson d'aliments dont la conception procure un grand confort d'utilisation, allié à un niveau de sécurité élevé.

Un autre objet de l'invention vise à proposer un nouvel appareil de cuisson d'aliments qui peut être fabriqué avec des moyens industriels conventionnels et qui autorise une grande liberté de conception du couvercle et de la cuve.

Un autre objet de l'invention vise à proposer un nouvel appareil de cuisson d'aliments qui peut être saisi et manipulé de manière particulièrement efficace, fiable et confortable.

Un autre objet de l'invention vise à proposer un nouvel appareil de cuisson d'aliments dont la conception permet une utilisation sous pression (mode autocuiseur) ou à pression atmosphérique (mode faitout) en ne mettant en œuvre qu'une seule et même cuve.

Les objets assignés à l'invention sont atteints à l'aide d'un appareil de cuisson d'aliments selon la revendiction 1.

D'autres objets et avantages de l'invention apparaîtront et ressortiront plus en détails à la lecture de la description qui suit, en référence aux dessins annexés, donnés à titre purement illustratif et non limitatif, parmi lesquels :

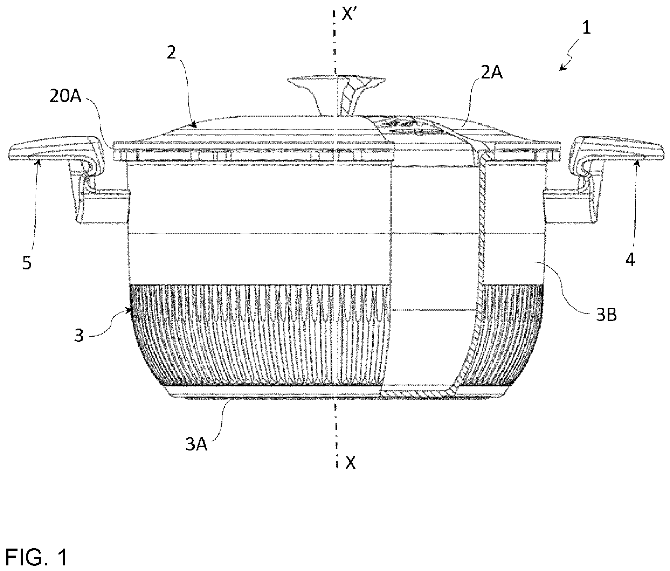

- la figure 1 illustre, selon une vue schématique en perspective avec une coupe locale, un appareil de cuisson d'aliments selon l'invention.

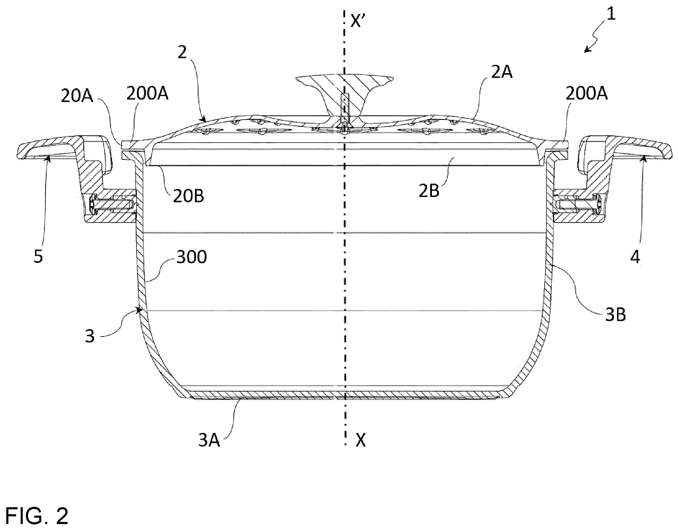

- la figure 2 illustre, selon une vue schématique en coupe intégrale, l'appareil de la Figure 1.

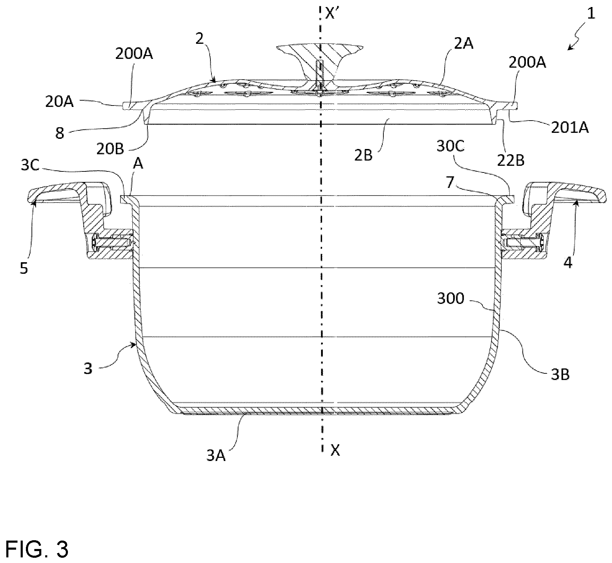

- la figure 3 est similaire à la Figure 2, à la différence près que le couvercle est séparé de la cuve.
- la figure 4 est une vue agrandie d'un détail de la Figure 2, correspondant à l'interface entre la cuve et le couvercle lorsque ce dernier est rapporté sur la cuve pour former avec cette dernière l'enceinte de cuisson.
- la figure 5 est une vue analogue à celle de la figure 4, qui illustre une trajectoire d'échappement de la vapeur hors de l'enceinte.
- la figure 6 est une vue d'un détail de la figure 5, avec une ligne fermée en pointillés qui illustre schématiquement la première portion circonférentielle de l'espace libre interstitiel ménagé entre le premier couvercle et la cuve.
- la figure 7 est analogue à la figure 6 et illustre avec des lignes fermées en pointillés un passage amont et une chambre de détente qui font partie de ladite première portion circonférentielle, ainsi qu'une deuxième portion circonférentielle qui forme un passage aval situé à l'aval de la chambre de détente dans le sens de l'échappement de vapeur.

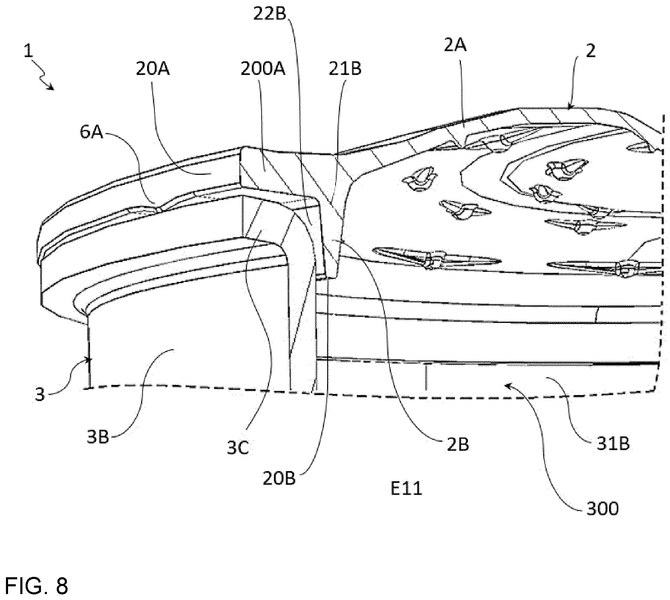

- la figure 8 illustre, selon une vue en coupe, un détail de l'appareil de cuisson des figures précédentes.

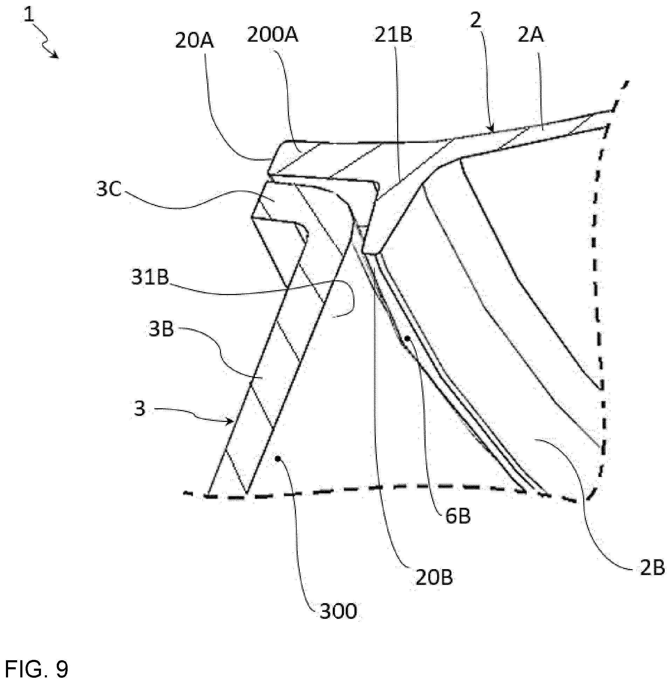

- la figure 9 illustre, selon une vue schématique en coupe, un autre détail de réalisation de l'appareil des figures précédentes.
- la figure 10 illustre, selon une vue schématique en perspective de dessous, le couvercle de l'appareil de cuisson d'aliments des figures précédentes.

Comme illustré aux figures, l'invention concerne un appareil 1 de cuisson d'aliments, destiné à assurer la cuisson de différents aliments en présence de vapeur, et par exemple de vapeur d'eau. Ladite vapeur est générée par le chauffage, au sein de l'appareil 1 et en présence des aliments, d'un liquide de cuisson, par exemple un liquide aqueux, qui contient par exemple au moins 50% en poids d'eau.

Le terme « *vapeur* » doit ici être pris dans une acception extensive et désigne ainsi indifféremment :
- une substance (de préférence aqueuse) à l'état gazeux, ou
- ladite substance (de préférence aqueuse) à l'état liquide sous la forme d'un brouillard de gouttelettes et/ou de microgouttelettes, ou
- un mélange de ladite substance (de préférence aqueuse) à l'état gazeux et de ladite substance (de préférence aqueuse) à l'état liquide sous la forme d'un brouillard de gouttelettes et/ou de microgouttelettes.

En d'autres termes, l'expression « *vapeur* d'eau » n'est pas ici limitée à sa définition strictement scientifique et recouvre l'eau à l'état gazeux, les particules d'eau liquide en suspension dans l'air, ou un mélange d'eau à l'état gazeux et de particules d'eau liquide (gouttelettes et/ou microgouttelettes) en suspension dans l'air.

L'appareil 1 est préférentiellement destiné à un usage domestique, étant entendu toutefois que l'invention peut également concerner les appareils professionnels ou semi-professionnels. L'appareil 1 est conçu pour être chauffé par une source de chauffe qui est de préférence externe, c'est-à-dire qui ne fait pas partie de l'appareil 1. L'appareil 1 est par exemple destiné à être disposé sur une plaque de cuisson indépendante pour chauffer son contenu.

L'appareil 1 de cuisson d'aliments comprend au moins d'une part un premier couvercle 2 et d'autre part une cuve 3 sur laquelle ledit couvercle 2 est destiné à reposer librement pour former une enceinte de cuisson. Le premier couvercle 2 est ainsi avantageusement distinct et indépendant de la cuve 3, et est conçu pour être associé à la cuve 3, en étant de préférence rapporté sur cette dernière, afin de former ladite enceinte de cuisson. En raison du fait que le premier couvercle 2 repose librement sur la cuve 3, de préférence sans aucun joint d'étanchéité interposé entre le premier couvercle 2 et la cuve 3, l'enceinte de cuisson ne peut pas monter en pression, c'est-à-dire que l'enceinte de cuisson est conçue pour que la pression interne régnant en son sein n'excède sensiblement pas la pression atmosphérique, ou n'excède que légèrement (par exemple d'une valeur comprise entre 1 et 3 kPa) et temporairement la pression atmosphérique. Le premier couvercle 2 est également avantageusement dépourvu de moyen de régulation de pression, du genre soupape de régulation. En d'autres termes, l'enceinte de cuisson constituée par l'association du premier couvercle 2 et de la cuve 3 forme une marmite de cuisson à pression atmosphérique, et de préférence un faitout.

Dans ce cas, l'appareil 1 est dépourvu de moyen de verrouillage du premier couvercle 2 relativement à la cuve 3, de sorte que le premier couvercle 2 peut à tout moment, y compris pendant le cycle de cuisson, être séparé manuellement de la cuve 3.

Avantageusement, l'appareil 1 de cuisson d'aliments comprend, en plus du premier couvercle 2 précité, un deuxième couvercle (non illustré) à associer à la cuve 3 en alternance avec le premier couvercle 2. En d'autres termes, la cuve 3 peut être associée, en fonction du mode de cuisson souhaité, soit avec le premier couvercle 2, soit avec le deuxième couvercle. Lesdits deuxième couvercle et cuve 3 sont avantageusement pourvus de moyens de verrouillage respectifs complémentaires, formant par exemple un système de verrouillage à baïonnette, pour que lesdits deuxième couvercle et cuve 3 forment ensemble une enceinte de cuisson capable de monter en pression. En d'autres termes, l'enceinte de cuisson formée par l'association du deuxième couvercle et de la cuve 3 est une enceinte de cuisson d'aliments sous pression, dont la pression interne peut s'élever jusqu'à un niveau supérieur à la pression atmosphérique, et qui excède par exemple la pression atmosphérique d'une valeur comprise entre 10 et 120 kPa, ou par exemple entre 50 et 100 kPa, ou encore entre 50 et 90 kPa. À cette fin, le deuxième couvercle est avantageusement pourvu d'un joint d'étanchéité destiné à assurer une étanchéité au gaz à l'interface entre le deuxième couvercle et la cuve 3. Le deuxième couvercle est également avantageusement pourvu d'une soupape de régulation de pression, agencée pour maintenir la pression régnant dans l'enceinte de cuisson à une valeur prédéterminée sensiblement constante, dite pression de fonctionnement, laquelle excède la pression atmosphérique d'une valeur qui est comprise par exemple entre 10 et 120 kPa, comme exposé précédemment. Le deuxième couvercle comporte avantageusement d'autres organes de sécurité (par exemple moyen de sécurité à l'ouverture, soupape de sécurité à la surpression...) dont est dépourvu au contraire le premier couvercle 2.

L'appareil 1 peut ainsi être utilisé dans un mode « *faitout* », dans lequel la cuve 3 est associée librement au premier couvercle 2, ou dans un mode « *autocuiseur*»*,* dans lequel la même cuve 3 est associée au deuxième couvercle, lequel est verrouillé sur la cuve 3 pour permettre la montée en pression de l'enceinte de cuisson.

La cuve 3 forme un récipient de cuisson destiné à cuire les aliments et présente par exemple une symétrie de révolution selon un axe vertical central X-X', lequel s'étend selon une direction s'apparentant à la direction verticale lorsque l'appareil 1 est en fonctionnement normal, c'est-à-dire repose sur un plan horizontal. Il est cependant tout à fait envisageable, selon une variante alternative non illustrée, que la cuve 3 présente non pas un contour circulaire comme illustré aux figures mais un contour ellipsoïde, ovale, sans pour autant que l'on sorte du cadre de l'invention. Avantageusement, la cuve 3 est fabriquée à partir d'un matériau métallique tel que l'acier inoxydable ou l'aluminium. Elle comprend préférentiellement, comme illustré aux figures, un fond 3A (qui est par exemple un fond thermo-conducteur multicouches) ainsi qu'une paroi latérale annulaire 3B qui s'élève entre le fond 3A (de préférence à partir de la périphérie de ce dernier) et un bord supérieur libre 3C qui prolonge ladite paroi latérale 3B et s'étend latéralement vers l'extérieur de la cuve 3, comme illustré aux figures. La paroi latérale 3B présente avantageusement une première face interne 31B, qui se trouve en regard du volume interne défini par la cuve 3. Le bord supérieur libre 3C de la cuve 3, qui forme la partie terminale supérieure de la cuve 3, s'étend par exemple radialement vers l'extérieur de la cuve 3 pour former au moins une surface annulaire, en forme de collerette, définissant une zone d'appui A sur et contre laquelle est destinée à venir reposer librement le premier couvercle 2. Dans le cas où les moyens de verrouillage respectifs complémentaires de la cuve 3 et du deuxième couvercle forment un système à baïonnettes, des encoches sont ménagées à intervalles réguliers dans le bord supérieur libre 3C, pour que ce dernier forme des rampes de verrouillage espacées les unes des autres (par les encoches en question). Lesdites rampes de verrouillage sont dans ce cas avantageusement destinées à coopérer avec des rampes de verrouillage complémentaires portées par le deuxième couvercle. Le bord supérieur libre 3C présente une deuxième face interne 31C, qui se situe dans le prolongement de la première face interne 31B de la paroi latérale 3B.

Avantageusement, l'appareil 1 est pourvu d'au moins une première poignée de préhension 4 attachée à la cuve 3 pour permettre de manipuler cette dernière. La première poignée de préhension 4 fait ainsi saillie extérieurement de la paroi latérale 3D, sur la face externe de laquelle elle est fixée.

De préférence, l'appareil 1 comprend également une deuxième poignée de préhension 5, elle aussi attachée à la cuve 3, lesdites première et deuxième poignées de préhension 4, 5 étant disposées de façon diamétralement opposée par rapport à l'axe central X-X'.

Conformément à l'invention, au moins l'un desdits cuve 3 et premier couvercle 2 est pourvu d'une pluralité d'excroissances localisées 6A, 6B, 6C, 6D, 6E, 6F, 6G, 6H, 61, destinées à venir au contact de l'autre desdits cuve 3 et premier couvercle 2, en des zones de contact respectives, lorsque le premier couvercle 2 repose librement sur la cuve 3, pour ménager en dehors desdites zones de contact, de façon permanente et indépendamment du niveau de pression régnant dans l'enceinte, un espace libre circonférentiel E entre lesdits cuve 3 et premier couvercle 2. En d'autres termes, lesdites excroissances localisées 6A, 6B, 6C, 6D, 6E, 6F, 6G, 6H, 61 forment des écarteurs qui permettent de maintenir à distance la cuve 3 et le premier couvercle 2 lorsque ce dernier repose sur la cuve 3 pour former l'enceinte de cuisson. Grâce à cet écartement entre la cuve 3 et le premier couvercle 2 réalisé au moyen des excroissances localisées 6A, 6B, 6C, 6D, 6E, 6F, 6G, 6H, 61, il existe un passage libre entre la cuve 3 et le premier couvercle 2, qui est formé par ledit espace libre circonférentiel E, et qui assure une mise en communication de l'intérieur de l'enceinte avec l'extérieur. Le caractère circonférentiel de l'espace libre E correspond au fait que l'espace libre E s'étend sensiblement sur tout le pourtour du bord supérieur libre 3C (à l'exception des zones de contact précitées). Ainsi, l'espace libre circonférentiel E s'étend le long du pourtour du bord supérieur libre 3C, de sorte qu'il présente une forme sensiblement annulaire, interrompue localement par les zones de contact précitées au niveau desquelles la pluralité d'excroissances 6A, 6B, 6C, 6D, 6E, 6F, 6G, 6H, 6I assure l'écartement calibré de la cuve 3 et du premier couvercle 2. Le caractère circonférentiel de l'espace libre E favorise un échappement doux et progressif de la vapeur, qui est distribuée sensiblement à 360°. Cela évite les phénomènes d'émission d'un jet de vapeur puissant rencontrés par exemple avec les appareils de l'art antérieur dont le couvercle est muni d'un orifice de fuite.

Comme évoqué précédemment, ledit espace libre circonférentiel E entre lesdits cuve 3 et premier couvercle 2 est ménagé en permanence entre la cuve 3 et le premier couvercle 2, quel que soit le niveau de pression régnant dans l'enceinte. En particulier, la réalisation de l'espace libre circonférentiel E entre les cuve 3 et premier couvercle 2 n'est pas provoquée par un niveau de pression spécifique atteint au sein de l'enceinte. Il n'est notamment pas nécessaire que le couvercle 2 se soulève de la cuve 3 sous l'effet de la pression pour ménager ledit espace libre circonférentiel E. L'espace libre circonférentiel E ainsi ménagé entre les cuve 3 et premier couvercle 2 permet un échappement de vapeur V de l'intérieur de l'enceinte vers l'extérieur. Ainsi, la vapeur V peut s'échapper continûment vers l'extérieur, dès le début de sa production au cours du cycle de cuisson, en passant par l'espace libre circonférentiel E ménagé en permanence entre la cuve 3 et le premier couvercle 2. Ceci évite une expulsion brusque de vapeur qui pourrait se produire si par exemple le premier couvercle 2 venait au contact de la cuve 3 sur toute sa circonférence, et non pas seulement en des zones de contact localisées. Dans une telle situation, que l'invention permet précisément d'éviter, la vapeur s'accumulerait au sein de l'enceinte et la pression augmenterait à l'intérieur de cette dernière progressivement jusqu'à surmonter le poids du couvercle, ce dernier se soulevant alors brièvement pour laisser passer la vapeur ainsi brutalement expulsée. L'expulsion brusque de vapeur est une source d'inconfort, voire d'insécurité pour l'utilisateur. Elle est également de nature à projeter de la vapeur à une distance relativement importante à l'extérieur de l'enceinte, au point que la vapeur pourrait atteindre les poignées 4, 5 et venir se condenser sur ces dernières. Au contraire, selon l'invention, l'espace libre circonférentiel E est ménagé de manière permanente, indépendamment du niveau de pression régnant dans la cuve 3 couverte par le premier couvercle 2, autorisant ainsi une fuite de vapeur continue, douce et à faible vitesse, ce qui permet de limiter l'ensemble des inconvénients précités.

Ladite pluralité d'excroissances 6A, 6B, 6C, 6D, 6E, 6F, 6G, 6H, 61 est portée par ledit premier couvercle 2, de sorte que lesdites excroissances localisées 6A, 6B, 6C, 6D, 6E, 6F, 6G, 6H, 61 et ledit premier couvercle 2 forment un sous-ensemble unitaire d'un seul tenant, indépendant et distinct de la cuve 3. Selon un exemple ne faisant pas partie de l'invention, il est cependant parfaitement envisageable que ladite pluralité d'excroissances 6A, 6B, 6C, 6D, 6E, 6F, 6G, 6H, 61 soit alternativement portée par la cuve 3, ou même qu'une partie desdites excroissances soit portée par la cuve 3 tandis qu'une autre partie est portée par le premier couvercle 2. Le recours à des excroissances 6A, 6B, 6C, 6D, 6E, 6F, 6G, 6H, 61 localisées portées par le premier couvercle 2, comme illustré aux figures, est toutefois préféré, car il permet une fabrication simplifiée et offre la possibilité d'utiliser une même cuve 3 avec des couvercles différents, et par exemple avec le deuxième couvercle de cuisson sous pression évoqué dans ce qui précède.

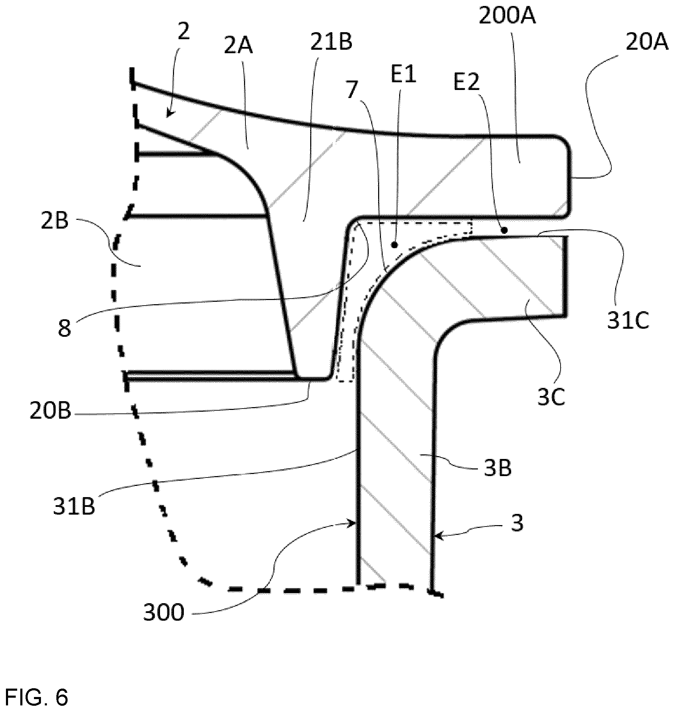

Conformément à l'invention, ledit espace libre circonférentiel E ménagé entre les cuve 3 et premier couvercle 2 par la pluralité d'excroissances 6A, 6B, 6C, 6D, 6E, 6F, 6G, 6H, 6I localisées comprend au moins une première portion circonférentielle E1 (illustrée en coupe transversale selon un plan radial par la figure 6) dont le volume croît de l'intérieur vers l'extérieur de l'enceinte. Comme visible en particulier sur la figure 6, la première portion circonférentielle E1 s'évase de l'intérieur de l'enceinte vers l'extérieur, c'est-à-dire que l'écartement entre la cuve 3 et le premier couvercle 2, qui est réglé par la hauteur de la pluralité d'excroissances localisées 6A, 6B, 6C, 6D, 6E, 6F, 6G, 6H, 61, augmente de l'intérieur de l'enceinte en direction de l'extérieur.

Grâce à cette caractéristique, la vapeur V qui s'échappe hors de l'enceinte, en passant par l'espace libre circonférentiel E ménagé entre les cuve 3 et premier couvercle 2, subit une baisse de vitesse et/ou de pression, de sorte que le flux de vapeur qui s'échappe hors de l'enceinte est significativement ralenti. Ceci permet un échappement doux de la vapeur V hors de l'enceinte, de sorte que la vapeur V s'élève en douceur directement vers le haut dès qu'elle se trouve à l'extérieur de l'appareil 1, au lieu d'être projetée radialement en direction des première et deuxième poignées de préhension 4, 5 attachées à la cuve 3.

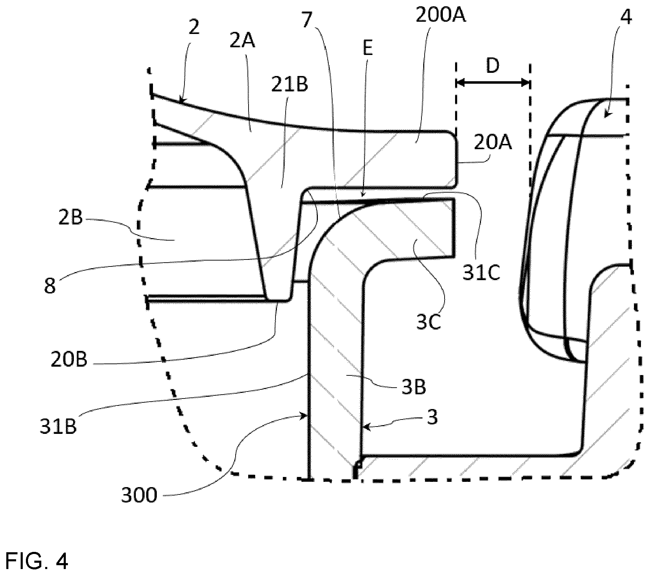

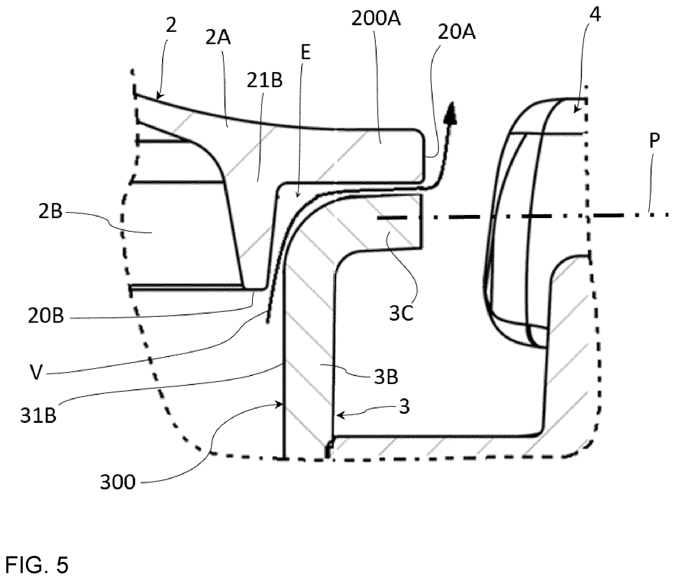

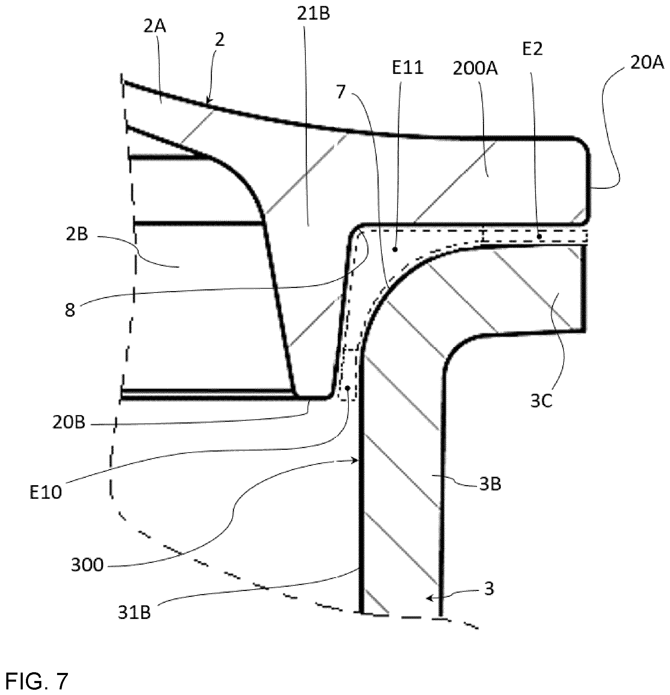

Ainsi, la conception selon l'invention permet d'approcher au plus près de l'espace libre circonférentiel E chacune desdites première et deuxième poignées de préhension 4, 5 attachées à la cuve 3, sans risque de voir la vapeur V s'échappant hors de l'enceinte venir frapper la surface de l'une et/ou l'autre desdites poignées 4, 5 pour se condenser sur ces dernières. Cet effet est d'autant plus remarquable qu'il est obtenu en mettant simplement en œuvre un espace libre circonférentiel E permanent et indépendant du niveau de pression régnant dans l'enceinte, dont une première portion circonférentielle E1 s'évase de l'intérieur vers l'extérieur de l'enceinte, de sorte que son volume croît de l'intérieur vers l'extérieur comme cela est visible sur les vues en coupe transversales des figures 4 à 7. Avantageusement, ledit espace libre circonférentiel E peut déboucher sur l'extérieur de l'enceinte sensiblement au droit de ladite première poignée de préhension 4, de préférence également sensiblement au droit de ladite deuxième poignée de préhension 5. Cela signifie qu'il existe avantageusement un plan P qui est sensiblement parallèle au fond 3A de la cuve 3 et qui passe à la fois par le bord supérieur libre 3C et par au moins ladite première poignée de préhension 4, comme illustré par la figure 5. De façon encore plus préférentielle, au moins une partie de ladite première poignée de préhension 4 s'étend au-dessus dudit plan P. Grâce au positionnement des poignées 4, 5 au droit de l'espace libre circonférentiel E, chaque poignée de préhension 4, 5 s'avère particulièrement pratique à saisir et la manipulation de la cuve 3 est facilitée, car un tel positionnement haut des poignées favorise une prise stable de l'appareil 1 même lorsque ce dernier est rempli. Un tel positionnement de la première poignée de préhension 4 (et avantageusement de la deuxième poignée de préhension 5) au droit de l'espace circonférentiel E, comme illustré aux figures, est rendu possible par l'absence de projection de vapeur V sur les poignées 4, 5, qui découle elle-même des caractéristiques de l'espace libre circonférentiel E exposé précédemment (présence permanente et volume croissant de l'intérieur vers l'extérieur sur au moins une portion circonférentielle E1).

De préférence, la distance D séparant chaque poignée de préhension 4, 5 de l'espace libre circonférentiel E, qui correspond par exemple à la distance séparant chaque poignée de préhension 4, 5 du bord supérieur libre 3C, est inférieure à 25 mm, de façon préférentielle est comprise entre 5 et 20 mm, et de façon encore plus préférentielle est comprise entre 10 et 15 mm. Le recours à une distance D de valeur réduite, et de préférence comprise dans les plages ci-dessus, permet de bénéficier d'un appareil 1 particulièrement compact et peu encombrant, dont la manipulation est particulièrement sûre, pratique et stable, grâce notamment au fait que chaque poignée 4, 5 est disposée au plus près du centre de gravité de l'appareil 1. Pour autant la vapeur V ne se condense pas sur les poignées 4, 5 grâce à la conformation spécifique de l'espace libre circonférentiel E exposée dans ce qui précède.

De préférence, ladite première poignée de préhension 4, tout comme avantageusement ladite deuxième poignée de préhension 5, présente une forme pleine, c'est-à-dire une forme massive et non une forme curviligne ou une forme d'anse. Le recours à une telle forme pleine permet de faciliter la fabrication, notamment par moulage de matière plastique et de procurer une prise manuelle sûre et confortable. La mise en œuvre d'une telle forme pleine, à proximité immédiate de l'interface entre le premier couvercle 2 et la cuve 3, est rendue possible par le faible risque de voir la vapeur V s'échappant de l'enceinte venir frapper les poignées 4, 5, grâce à la présence de la première portion circonférentielle E1 dont le volume croît vers l'extérieur.

Avantageusement, la première poignée de préhension 4, tout comme de préférence la deuxième poignée de préhension 5, est réalisée en un matériau plastique, de préférence thermodurcissable (par exemple une résine phénolique). En tout état de cause, la première poignée de préhension 4, tout comme de préférence également la deuxième poignée de préhension 5, n'est pas réalisée en un matériau métallique, mais de préférence en un matériau isolant thermiquement, comme les matériaux plastique, en particulier les matériaux plastique cités dans ce qui précède. Ceci permet là encore de faciliter la préhension, en évitant que les poignées deviennent brûlantes et donc difficiles à saisir. Pour autant, le risque de condensation sur les poignées de préhension 4, 5 reste limité grâce à la mise en œuvre des différentes caractéristiques relatives à l'espace libre circonférentiel E exposées dans ce qui précède.

Avantageusement, le premier couvercle 2 comprend une paroi supérieure 2A qui forme un élément de couverture dont la forme et les dimensions sont sensiblement conjuguées à celles de l'ouverture d'accès délimitée par le bord supérieur libre 3C de la cuve 3. De préférence, ladite paroi supérieure 2A est pleine, c'est-à-dire qu'elle est dépourvue d'orifice traversant, et en particulier dépourvue d'orifice traversant permettant une fuite de vapeur de l'intérieur de l'enceinte vers l'extérieur. La paroi supérieure 2A présente préférentiellement un contour périphérique sensiblement circulaire (pour s'adapter à un bord supérieur libre 3C lui-même de contour sensiblement circulaire) ou ellipsoïde (pour s'adapter à une cuve 3 dont le bord supérieur libre 3C présente lui-même un contour ellipsoïde). Ladite paroi supérieure 2A est délimitée latéralement par un bord circonférentiel 20A, qui définit ledit contour périphérique de la paroi supérieure 2A.

La paroi supérieure 2A du premier couvercle 2 comprend une portion périphérique 200A, qui de préférence inclut le bord circonférentiel 20A, et qui est conçue pour reposer sur le bord supérieur libre 3C de la cuve 3 lorsque le premier couvercle 2 repose librement sur cette dernière. Plus précisément, la portion périphérique 200A présente une face inférieure 201A conçue pour venir en appui, de préférence localement comme cela sera exposé plus en détail dans ce qui suit, contre la deuxième face interne 31C du bord supérieur libre 3C.

Le premier couvercle 2 comprend en outre une jupe 2B formée par un bord tombant annulaire qui s'étend à partir de ladite paroi supérieure 2A, de préférence sensiblement parallèlement à l'axe central X-X'. Avantageusement, la jupe périphérique annulaire 2B vient de matière avec la paroi supérieure 2A, tout comme la portion périphérique 200A. De préférence, le premier couvercle 2 est ainsi obtenu par une opération de moulage d'un matériau métallique, de sorte que la paroi supérieure 2A et la jupe périphérique 2B forment avantageusement une pièce d'un seul tenant.

La jupe 2B s'étend à partir de la paroi supérieure 2A à distance dudit bord circonférentiel 20A, comme illustré aux figures. La jupe 2B présente avantageusement une face externe 22B, destinée à se trouver en regard de la première face interne 31B lorsque le premier couvercle 2 repose librement sur la cuve 3. La jupe 2B est ainsi conçue pour être disposée à l'intérieur de la cuve 3, lorsque le premier couvercle 2 repose librement sur cette dernière. La jupe 2B forme ainsi un anneau de position et de centrage qui permet de centrer le premier couvercle 2 sur la cuve 3 lorsque le premier couvercle 2 est rapporté librement sur cette dernière. À cette fin, la jupe 2B présente avantageusement, comme illustré aux figures, une forme sensiblement cylindrique ou tronconique et s'étend avantageusement entre d'une part un bord libre inférieur 20B, de contour sensiblement conjugué à celui de la paroi latérale 3B de la cuve 3, et par exemple de contour sensiblement circulaire ou ellipsoïde, et d'autre part une portion de raccordement 21B reliée à la portion périphérique 200A, laquelle déborde latéralement vers l'extérieur à partir de la jupe 2B. Comme évoqué précédemment, le premier couvercle 2 est préférentiellement destiné à venir coiffer de façon sensiblement ajusté le sommet de la cuve 3, de sorte que la jupe 2B est ceinturée par l'extérieur par le sommet de la paroi latérale 3A et le bord supérieur libre 3C, tandis que la paroi supérieure 2A repose, au niveau de sa portion périphérique 200A, en appui sur le bord libre 3C.

Le recours à une telle conception de couvercle permet de régler de façon particulièrement simple et efficace la géométrie de l'espace libre circonférentiel E, comme cela ressortira plus en détails de la description qui suit. Une telle conception, mettant en œuvre une jupe 2B qui s'étend à distance du bord circonférentiel 20A, de façon à être plus proche de l'axe vertical central X-X' que ne l'est le bord circonférentiel 20A, permet également de guider selon une orientation sensiblement radiale le flux de vapeur s'échappant hors de l'enceinte par ledit espace libre circonférentiel E. Ceci favorise ensuite l'échappement vertical de la vapeur et évite en particulier de diriger la vapeur vers le bas (ce qui pourrait conduire à une condensation sur les pièces métalliques éventuellement utilisées pour fixer les poignées de cuve 4, 5).

Ladite pluralité d'excroissances 6A, 6B, 6C, 6D, 6E, 6F, 6G, 6H, 61 comprend des première excroissances 6A, 6C, 6E, 6G, 61 qui font saillie de la portion périphérique 200A de la paroi supérieure 2A, et des deuxièmes excroissances 6B, 6D, 6F, 6H qui font saillie de ladite jupe 2B, pour maintenir ladite portion périphérique 200A et ladite jupe 2B écartée respectivement dudit bord supérieur libre 3C et de ladite paroi latérale 3B lorsque le premier couvercle 2 repose librement sur la cuve 3. Plus précisément, les premières excroissances 6A, 6C, 6E, 6G, 61 sont disposées sur la face interne 201A de la portion périphérique 200A, de préférence selon une distribution régulière le long de la portion périphérique 200A, de sorte que chacune desdites premières excroissances 6A, 6C, 6E, 6G, 6I est séparée d'une autre première excroissance qui lui est adjacente par un même secteur angulaire mesuré par rapport à l'axe vertical central X-X'. Chacune desdites premières excroissances 6A, 6C, 6E, 6G, 61 forme ainsi avantageusement une protubérance localisée, par exemple en forme de bosse, qui vient en appui sur et contre la deuxième face interne 31C du bord supérieur libre 3C, pour ménager de façon permanente un espace interstitiel entre la portion périphérique 200A et le bord supérieur libre 3C, afin de permettre un échappement de vapeur V hors de l'enceinte.

Les deuxièmes excroissances 6B, 6D, 6F, 6H font quant à elles avantageusement saillie radialement de la face externe 22B de la jupe 2B, pour pouvoir venir en appui latéral contre la face interne 300 de la cuve 3, au niveau de la paroi latérale 3B et/ou du bord supérieur libre 3C.

Avantageusement, lesdites première face interne 31B et deuxième face interne 31C contribuent à former ladite face interne 300 de la cuve 3. Les deuxièmes excroissances 6B, 6D, 6F, 6H permettent ainsi de maintenir un écartement constant entre la jupe 2B et la cuve 3, ménageant ainsi, en combinaison avec les premières excroissances 6A, 6C, 6E,6G, 61 ledit espace libre circonférentiel E.

Avantageusement, les deuxièmes excroissances 6B, 6D, 6F, 6H sont distribuées de manière régulière sur le pourtour de la jupe 2B, de façon à être séparées les unes des autres par un même secteur angulaire mesuré par rapport à l'axe vertical central X-X'.

Les premières excroissances 6A, 6C, 6E, 6G, 61 forment ainsi des butées de surélévation du premier couvercle 2 relativement à la cuve 3 lorsque le premier couvercle 2 repose librement sur la cuve 3, tandis que les deuxièmes excroissances 6B, 6D, 6F, 6H forment des butées de centrage du premier couvercle 2 par rapport à la cuve 3, la combinaison des butées de centrage et de surélévation précitées permettant de ménager des sections régulières de passages de la vapeur V entre la cuve 3 et le premier couvercle 2.

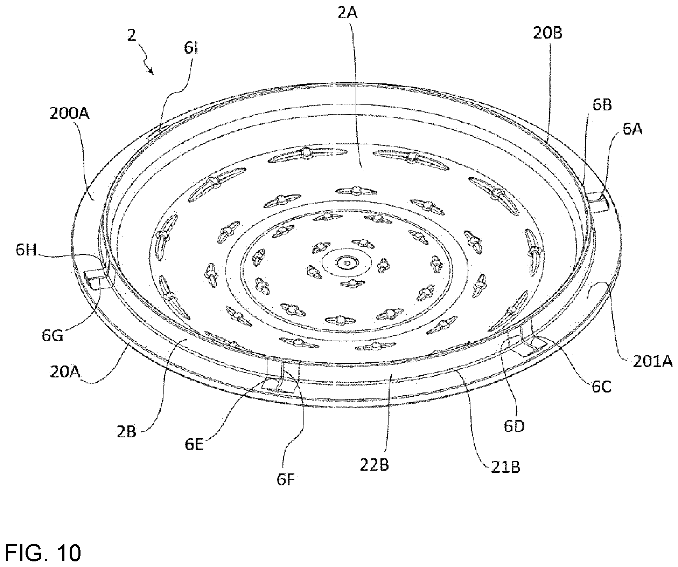

De préférence, chaque première excroissance 6A, 6C, 6E,6G, 61 est disposée en correspondance radiale avec l'une des deuxièmes excroissances 6B, 6D, 6F, 6H, de sorte que chaque première excroissance 6A, 6C, 6E, 6G, 61 s'étend dans un même plan radial qu'une deuxième excroissance 6B, 6D, 6F, 6H, comme illustré par la figure 10. Une telle caractéristique permet de faciliter la fabrication du premier couvercle 2, en limitant l'étendue des zones du premier couvercle 2 qui comportent des irrégularités géométriques formées par les premières et deuxièmes excroissances 6A, 6B, 6C, 6D, 6E, 6F, 6G, 6H, 61.

Avantageusement, l'appareil 1 comprend une pluralité de nervures s'étendant chacune à la fois sur la portion périphérique 200A et sur la jupe 2B pour former à la fois l'une desdites premières excroissances 6A, 6C, 6E, 6G, 61, et l'une des deuxièmes excroissances 6B, 6D, 6F, 6H. Dans ce mode de réalisation préférentiel, illustré aux figures, le premier couvercle 2 présente une construction extrêmement simple, avec des nervures qui s'étendent dans deux plans différents, le long de la jupe 2B et de la portion périphérique 200A, pour ménager un écartement permanent entre la cuve 3 et le couvercle 2, sur sensiblement tout le pourtour de ces derniers, sauf bien entendu au niveau des zones de contact ponctuelles entre les excroissances 6A, 6B, 6C, 6D, 6E,6F, 6G, 6H, 61 et la cuve 3. L'invention permet ainsi, grâce à des moyens extrêmement simples, dont la conception autorise une fabrication en une pièce d'un seul tenant, de réaliser des appuis ponctuels du premier couvercle 2 contre la cuve 3 à la fois selon la direction verticale et selon différentes directions radiales. Ces appuis ponctuels verticaux et radiaux permettent au premier couvercle 2 d'atteindre naturellement une position stable dans laquelle il repose sur et contre la cuve 3, en ménageant un espace libre circonférentiel E permanent entre la cuve 3 et le premier couvercle 2 qui autorise l'échappement de vapeur V en dehors de l'enceinte.

Lesdites face externe 22B et face inférieure 201A appartenant respectivement à la jupe 2B et à la portion périphérique 200A sont avantageusement destinées à se trouver localement en regard respectivement de ladite première face interne 31B et de ladite deuxième face interne 31C lorsque le premier couvercle 2 repose librement sur la cuve 3.

Avantageusement, lesdites première et deuxième faces internes 31B, 31C sont raccordées entre elles par une première surface courbe de raccordement 7 présentant un premier rayon de courbure comme illustré aux figures. Lesdites face externe 22B et face inférieure 21A sont raccordées entre elles par une deuxième surface courbe de raccordement 8 présentant un deuxième rayon de courbure qui est préférentiellement inférieur audit premier rayon de courbure. Par exemple, le quotient du premier rayon de courbure sur le deuxième rayon de courbure est avantageusement supérieur ou égal à 3, et de préférence supérieur ou égal à 7.

Grâce à cette différence entre le premier et le deuxième rayon de courbure, les première et deuxième surfaces courbes de raccordement 7, 8, disposées sensiblement en regard l'une de l'autre, définissent une section de passage agrandie puisque le contour interne du premier couvercle 2 ne suit pas le contour interne de la cuve 3. Ceci crée une chambre permettant de faire baisser la pression et/ou la vitesse de la vapeur V s'échappant hors de l'enceinte par l'espace libre circonférentiel E.

Avantageusement, ladite première portion circonférentielle E1 forme un passage amont E10 présentant une première section, ainsi qu'une chambre de détente E11 qui est située à l'aval dudit passage amont E10 dans le sens de l'échappement de vapeur V et au sein de laquelle débouche ledit passage amont E10, ladite chambre de détente E11 présentant une deuxième section supérieure à la première section. De préférence, lesdites première face interne 31B et face externe 22B contribuent à délimiter ledit passage amont E10, tandis que lesdites première et deuxième surfaces de raccordement 7, 8 contribuent quant à elles à délimiter ladite chambre de détente E11.

Grâce au différentiel des premier et deuxième rayons de courbure, la chambre de détente E11 présente une section élargie par rapport à la section du passage amont E10, et constitue ainsi un volume de détente permettant de réduire la pression du flux de vapeur s'échappant hors de l'enceinte par l'espace libre circonférentiel E. Cette chute de pression s'accompagne avantageusement d'une chute de vitesse du flux de vapeur V. Cela permet, comme exposé précédemment, d'obtenir un échappement de vapeur V qui s'effectue en douceur et ne vient pas au contact des poignées de préhension 4, 5 attachées à la cuve 3. Bien entendu, le recours à des rayons de courbure différents pour ménager le volume augmenté de la chambre de détente E11 n'est pas obligatoire, et d'autres conformations géométriques, tels que des chanfreins, peuvent être mis en œuvre pour parvenir à un effet technique similaire.

Avantageusement, ledit espace libre circonférentiel E comprend au moins une deuxième portion circonférentielle E2, qui forme un passage aval situé à l'aval de ladite chambre de détente E11 dans le sens de l'échappement de vapeur V, et au sein duquel débouche ladite chambre de détente E11. Avantageusement, lesdites deuxième face interne 31C et face inférieure 201A contribuent à délimiter ledit passage aval formé par la deuxième portion circonférentielle E2. De préférence, comme illustré aux figures, le passage aval formé par ladite deuxième portion circonférentielle E2 présente une troisième section qui est inférieure à la deuxième section. Ainsi, dans le mode de réalisation préférentiel illustré aux figures, la vapeur V qui s'échappe de l'intérieur de l'enceinte vers l'extérieur passe tout d'abord par le passage amont E10, qui présente de préférence une première section constante, puis débouche dans la chambre de détente E11 de section supérieure, délimitant ainsi un volume libre supérieur au volume libre défini par le passage amont E10, ce qui permet de faire chuter la pression et la vitesse du flux de vapeur V. Le flux de vapeur V passe ensuite par le passage aval formé par la deuxième portion circonférentielle E2, qui présente avantageusement une section constante définissant un volume réduit par rapport à celui de la chambre de détente E11, permettant ainsi de canaliser le flux de vapeur selon de préférence une direction radiale. Ledit passage aval débouche avantageusement à l'air libre, dans l'environnement extérieur de l'appareil 1. La mise en œuvre, à l'aval de la chambre de détente E11, d'un passage aval (formé par la deuxième portion circonférentielle E2) de section plus réduite permet en outre de réduire la section du flux de vapeur V s'échappant hors de l'appareil 1, ce qui contribue là encore à réduire le risque de condensation sur les poignées 4, 5.

En définitive, dans le mode de réalisation particulièrement préféré illustré aux figures, l'espace libre circonférentiel E présente, dans un plan de coupe radiale, une première section (correspondant au passage amont E10), suivie d'une deuxième section supérieure à la première section (correspondant à la chambre de détente E11), elle-même suivie d'une troisième section inférieure à la deuxième section (correspondant au passage aval formé par la deuxième portion circonférentielle E2). Ainsi, sur l'ensemble du périmètre, il est créé un volume intermédiaire correspondant à la chambre de détente E11, entre le début de sortie de la vapeur (passage amont E10) et la fin de sortie de la vapeur (passage aval formé par la deuxième portion circonférentielle E2). La présence de la chambre de détente E11 permet, en particulier lorsque cette dernière est interposée entre deux passages de moindres sections et volumes, de favoriser un échappement de vapeur vertical dès la sortie hors de l'appareil 1, quel que soit le niveau de puissance de chauffage.

Un exemple de fonctionnement de l'appareil 1 de cuisson d'aliments selon l'invention, conforme au mode de réalisation illustré aux figures, est le suivant.

Des aliments, ainsi qu'un volume aqueux (par exemple constitué essentiellement d'eau liquide) sont disposés dans la cuve 3, puis le premier couvercle 2 est rapporté sur la cuve 3 pour reposer librement sur cette dernière. Dans cette configuration, les premières excroissances 6A, 6C, 6E, 6G, 6I reposent sur la deuxième face interne 31C du bord libre 3C, tandis que les deuxièmes excroissances 6B, 6D, 6F, 6H maintiennent la jupe 2B écartée de la paroi latérale 3B de la cuve 3, ménageant ainsi l'espace libre circonférentiel E sur tout le périmètre de l'appareil 1 (à l'exception bien sûr des zones de contact entre les excroissances 6A, 6B, 6C, 6D, 6E, 6F, 6G, 6H, 61 et la cuve 3).

L'appareil 1 est disposé sur une plaque de cuisson pour en chauffer son contenu. Sous l'effet du chauffage en question, une partie du liquide contenu dans la cuve 3 se transforme en vapeur. Cette vapeur se trouve dans un milieu pratiquement clos du fait de la présence du premier couvercle 2 sur la cuve 3. Dès lors, la pression de la vapeur augmente progressivement au fur et à mesure de la montée en température de l'intérieur de l'enceinte, jusqu'à atteindre une valeur P0 qui excède légèrement la pression extérieure atmosphérique Pₐₜₘ. La vapeur se déplace alors sous l'effet de ce différentiel de pression (P0 > Pₐₜₘ) vers l'espace libre circonférentiel E qu'elle emprunte pour s'échapper hors de l'enceinte. Pour cela, la vapeur V passe tout d'abord par le passage amont E10, à la pression P0, puis arrive dans la chambre de détente E11. La chambre de détente E11 offrant à la vapeur, à la sortie du passage amont E10, un volume plus grand, la pression de la vapeur V diminue et passe d'une valeur P0 à P1, avec P1 < P0. La pression P1 est donc inférieure à la pression P0 régnant au cœur de la cuve 3, qui elle-même est légèrement supérieure à la pression atmosphérique externe Pₐₜₘ.

L'appareil 1 ne pouvant pas rentrer en dépression, puisqu'il n'est pas complètement clos grâce à la présence permanente de l'espace libre circonférentiel E, la pression P1 dans la chambre de détente E11 est très proche de la pression extérieure atmosphérique Pₐₜₘ.

La vapeur V poursuit ensuite son parcours de sortie à destination du milieu extérieur. Elle sort alors de la chambre de détente E11 et passe par le passage aval (formé par la deuxième portion circonférentielle E2) à la pression P1, et débouche sur l'extérieur. Ainsi, la vapeur V arrivant à l'extérieur à une pression P1 très proche de la pression atmosphérique Pₐₜₘ et inférieure à la pression interne P0 n'est pas expulsée énergiquement sur les côtés de l'appareil 1. Elle n'atteint donc pas les poignées 4, 5 qui dès lors peuvent être conçues pour être pleines, hautes et proches du bord 3C de la cuve 3. La vapeur V ainsi échappée hors de l'enceinte monte lentement à la verticale dès sa sortie du passage aval précité. Elle n'est donc pas en mesure de se condenser sur les poignées 4, 5, qu'elle n'atteint pas.

## Revendications

1. Appareil (1) de cuisson d'aliments comprenant au moins d'une part un premier couvercle (2) et d'autre part une cuve (3) sur laquelle ledit premier couvercle (2) est destiné à reposer librement pour former une enceinte de cuisson, ledit premier couvercle (2) étant pourvu d'une pluralité d'excroissances localisées (6A, 6B, 6C, 6D, 6E, 6F, 6G, 6H, 61) destinées à venir au contact de ladite cuve (3) en des zones de contact respectives, lorsque le premier couvercle (2) repose librement sur la cuve (3), pour ménager en dehors desdites zones de contact, de façon permanente et indépendamment du niveau de pression régnant dans l'enceinte, un espace libre circonférentiel (E) entre lesdits cuve (3) et premier couvercle (2) permettant un échappement de vapeur (V) de l'intérieur de l'enceinte vers l'extérieur, ledit espace libre circonférentiel (E) comprenant au moins une première portion circonférentielle (E1).s'évasant de l'intérieur de l'enceinte de cuisson vers l'extérieur, c'est-à-dire dont l'écartement entre la cuve (3) et le premier couvercle (2) augmente de l'intérieur de l'enceinte en direction de l'extérieur, ladite pluralité d'excroissances (6A, 6B, 6C, 6D, 6E, 6F, 6G, 6H, 61) étant portée par ledit premier couvercle (2), ladite cuve (3) comprenant un fond (3A), une paroi latérale annulaire (3B) qui s'élève entre le fond (3A) et un bord supérieur libre (3C) qui prolonge ladite paroi latérale (3B) et s'étend latéralement vers l'extérieur de la cuve (3), ledit premier couvercle (2) comprenant quant à lui une paroi supérieure (2A) délimitée latéralement par un bord circonférentiel (20A), ladite paroi supérieure (2A) comprenant une portion périphérique (200A) conçue pour reposer sur ledit bord supérieur libre (3C) lorsque le premier couvercle (2) repose librement sur la cuve (3), ledit premier couvercle (2) comprenant en outre une jupe (2B) formée par un bord tombant annulaire qui s'étend à partir de ladite paroi supérieure (2A) à distance dudit bord circonférentiel (20A), ladite jupe (2B) étant conçue pour être disposée à l'intérieur de la cuve (3) lorsque le premier couvercle (2) repose librement sur la cuve (3), ladite pluralité d'excroissances comprenant des premières et deuxièmes excroissances (6A, 6B, 6C, 6D, 6E, 6F, 6G, 6H, 61) qui font saillie respectivement de ladite portion périphérique (200A) et de ladite jupe (2B) pour maintenir ladite portion périphérique (200A) et ladite jupe (2B) écartées respectivement dudit bord supérieur libre (3C) et de ladite paroi latérale (3B) lorsque le premier couvercle (2) repose librement sur la cuve (3).

2. Appareil (1) de cuisson d'aliments selon la revendication 1 **caractérisé en ce qu'**il comprend une pluralité de nervures s'étendant chacune à la fois sur la portion périphérique (200A) et sur la jupe (2B) pour former à la fois l'une desdites premières excroissances (6A, 6C, 6E, 6G, 61) et l'une desdites deuxièmes excroissances (6B, 6D, 6F, 6H).

3. Appareil (1) de cuisson d'aliments selon la revendication 1 ou 2 **caractérisé en ce que** lesdits paroi latérale (3B) et bord supérieur libre (3C) présentent respectivement une première et une deuxième face interne (31B, 31C), tandis que lesdites jupe (2B) et portion périphérique (200A) présentent respectivement une face externe (22B) et une face inférieure (201A) destinées à se trouver localement en regard respectivement desdites première et deuxième faces internes (31B, 31C) lorsque le premier couvercle (2) repose librement sur la cuve (3), lesdites première et deuxième faces internes (31B, 31C) étant raccordées entre elles par une première surface courbe de raccordement (7) présentant un premier rayon de courbure, tandis que lesdites face externe (22B) et face inférieure (201A) sont raccordées entre elles par une deuxième surface courbe de raccordement (8) présentant un deuxième rayon de courbure qui est inférieur audit premier rayon de courbure.

4. Appareil (1) de cuisson d'aliments selon l'une quelconque des revendications précédentes **caractérisé en ce que** ladite première portion circonférentielle (E1) forme un passage amont (E10) présentant une première section ainsi qu'une chambre de détente (E11) qui est située à l'aval dudit passage amont (E10) dans le sens de l'échappement de vapeur et au sein de laquelle débouche ledit passage amont (E10), ladite chambre de détente (E11) présentant une deuxième section supérieure à la première section.

5. Appareil (1) de cuisson d'aliments selon les revendications 3 et 4 **caractérisé en ce que** lesdites première face interne (31B,) et face externe (22B) contribuent à délimiter ledit passage amont (E10), tandis que lesdites première et deuxième surfaces de raccordement (7, 8), contribuent à délimiter ladite chambre de détente (E11).

6. Appareil (1) de cuisson d'aliments selon la revendication 4 ou 5 **caractérisé en ce que** ledit espace libre circonférentiel (E) comprend au moins une deuxième portion circonférentielle (E2) qui forme un passage aval situé à l'aval de ladite chambre de détente (E11) dans le sens de l'échappement de vapeur et au sein duquel débouche ladite chambre de détente (E11), ledit passage aval présentant une troisième section inférieure à ladite deuxième section.

7. Appareil (1) de cuisson d'aliments selon les revendications 3 et 6 **caractérisé en ce que** lesdites deuxième face interne (31C) et face inférieure (201A) contribuent à délimiter ledit passage aval.

8. Appareil (1) de cuisson d'aliments selon l'une quelconque des revendications précédentes **caractérisé en ce qu'**il est pourvu d'au moins une première poignée de préhension (4) attachée à la cuve (3) et qui présente une forme pleine, ledit espace libre circonférentiel (E) débouchant sur l'extérieur de l'enceinte sensiblement au droit de ladite première poignée de préhension (4).

9. Appareil (1) de cuisson d'aliments selon l'une quelconque des revendications précédentes **caractérisé en ce qu'**il comprend un deuxième couvercle à associer à la cuve (3) en alternance avec ledit premier couvercle (2), lesdits deuxième couvercle et cuve (3) étant pourvus de moyens de verrouillage respectifs complémentaires pour former ensemble une enceinte de cuisson capable de monter en pression.

## Patentansprüche

1. Kochgerät (1) für Lebensmittel, umfassend mindestens einerseits einen ersten Deckel (2) und andererseits einen Behälter (3), auf welchem der erste Deckel (2) frei aufliegen soll, um einen Garraum zu bilden, wobei der erste Deckel (2) mit einer Mehrzahl lokalisierter Vorsprünge (6A, 6B, 6C, 6D, 6E, 6F, 6G, 6H, 61) versehen ist, die dazu bestimmt sind, bei freiem Aufliegen des ersten Deckels (2) auf dem Behälter (3) an jeweiligen Kontaktbereichen mit dem Behälter (3) in Berührung zu kommen, um außerhalb dieser Kontaktbereiche dauerhaft und unabhängig vom in dem Garraum herrschenden Druckniveau einen umlaufenden Freiraum (E) zwischen dem Behälter (3) und dem ersten Deckel (2) vorzusehen, der ein Entweichen von Dampf (V) aus dem Inneren des Garraums nach außen ermöglicht, wobei der umlaufende Freiraum (E) mindestens einen ersten umlaufenden Abschnitt (E1) umfasst, der sich von der Innenseite des Garraums nach außen hin aufweitet, das heißt, dessen Abstand zwischen dem Behälter (3) und dem ersten Deckel (2) von der Innenseite des Garraums in Richtung nach außen zunimmt, wobei die Mehrzahl von Vorsprüngen (6A, 6B, 6C, 6D, 6E, 6F, 6G, 6H, 61) von dem ersten Deckel (2) getragen wird, wobei der Behälter (3) einen Boden (3A), eine ringförmige Seitenwand (3B), die sich zwischen dem Boden (3A) und einem oberen freien Rand (3C) erstreckt, und der die Seitenwand (3B) verlängert und sich seitlich nach außen vom Behälter (3) erstreckt, umfasst, wobei der erste Deckel (2) seinerseits eine obere Wand (2A) umfasst, die seitlich durch einen umlaufenden Rand (20A) begrenzt ist, wobei die obere Wand (2A) einen Randabschnitt (200A) umfasst, der dafür ausgelegt ist, auf dem oberen freien Rand (3C) aufzulegen, wenn der erste Deckel (2) frei auf dem Behälter (3) aufliegt, wobei der erste Deckel (2) ferner einen Rock (2B) umfasst, der durch einen umlaufenden, nach unten gerichteten Rand gebildet ist, der sich von der oberen Wand (2A) in Abstand von dem umlaufenden Rand (20A) erstreckt, wobei der Rock (2B) dafür ausgelegt ist, im Inneren des Behälters (3) angeordnet zu sein, wenn der erste Deckel (2) frei auf dem Behälter (3) aufliegt,
wobei die Mehrzahl von Vorsprüngen erste und zweite Vorsprünge (6A, 6B, 6C, 6D, 6E, 6F, 6G, 6H, 61) umfasst, die jeweils von dem Randabschnitt (200A) bzw. von dem Rock (2B) vorspringen, um den Randabschnitt (200A) bzw. den Rock (2B) beim freien Aufliegen des ersten Deckels (2) auf dem Behälter (3) jeweils von dem oberen freien Rand (3C) bzw. von der Seitenwand (3B) beabstandet zu halten.

2. Kochgerät (1) für Lebensmittel nach Anspruch 1, **dadurch gekennzeichnet, dass** es eine Mehrzahl von Rippen umfasst, die sich jeweils sowohl über den Randabschnitt (200A) als auch über den Rock (2B) erstrecken, um sowohl einen der ersten Vorsprünge (6A, 6C, 6E, 6G, 61) als auch einen der zweiten Vorsprünge (6B, 6D, 6F, 6H) zu bilden.

3. Kochgerät (1) für Lebensmittel nach Anspruch 1 oder 2, **dadurch gekennzeichnet, dass** die Seitenwand (3B) und der obere freie Rand (3C) jeweils eine erste bzw. eine zweite Innenfläche (31B, 31C) aufweisen, während der Rock (2B) und der Randabschnitt (200A) jeweils eine Außenfläche (22B) bzw. eine Unterfläche (201A) aufweisen, die dazu bestimmt sind, sich beim freien Aufliegen des ersten Deckels (2) auf dem Behälter (3) örtlich jeweils der ersten bzw. zweiten Innenfläche (31B, 31C) gegenüber zu befinden, wobei die erste und die zweite Innenfläche (31B, 31C) durch eine erste gekrümmte Verbindungsfläche (7) mit einem ersten Krümmungsradius miteinander verbunden sind, während die Außenfläche (22B) und die Unterfläche (201A) durch eine zweite gekrümmte Verbindungsfläche (8) mit einem zweiten Krümmungsradius miteinander verbunden sind, der kleiner ist als der erste Krümmungsradius.

4. Kochgerät (1) für Lebensmittel nach einem der vorhergehenden Ansprüche, **dadurch gekennzeichnet, dass** der erste umlaufende Abschnitt (E1) einen stromaufwärts gelegenen Durchgang (E10) mit einem ersten Querschnitt sowie eine Entspannungskammer (E11) bildet, die stromabwärts des stromaufwärts gelegenen Durchgangs (E10) in Strömungsrichtung des Dampfes angeordnet ist und in die der stromaufwärts gelegene Durchgang (E10) mündet, wobei die Entspannungskammer (E11) einen zweiten Querschnitt aufweist, der größer ist als der erste Querschnitt.

5. Kochgerät (1) für Lebensmittel nach den Ansprüchen 3 und 4, **dadurch gekennzeichnet, dass** die erste Innenfläche (31B) und die Außenfläche (22B) zur Begrenzung des stromaufwärts gelegenen Durchgangs (E10) beitragen, während die erste und die zweite Verbindungsfläche (7, 8) zur Begrenzung der Entspannungskammer (E11) beitragen.

6. Kochgerät (1) für Lebensmittel nach Anspruch 4 oder 5, **dadurch gekennzeichnet, dass** der umlaufende Freiraum (E) mindestens einen zweiten umlaufenden Abschnitt (E2) umfasst, der einen stromabwärts gelegenen Durchgang bildet, der in Strömungsrichtung des Dampfes stromabwärts der Entspannungskammer (E11) angeordnet ist und in den die Entspannungskammer (E11) mündet, wobei der stromabwärts gelegene Durchgang einen dritten Querschnitt aufweist, der kleiner ist als der zweite Querschnitt.

7. Kochgerät (1) für Lebensmittel nach den Ansprüchen 3 und 6, **dadurch gekennzeichnet, dass** die zweite Innenfläche (31C) und die Unterfläche (201A) zur Begrenzung des stromabwärts gelegenen Durchgangs beitragen.

8. Kochgerät (1) für Lebensmittel nach einem der vorhergehenden Ansprüche, **dadurch gekennzeichnet, dass** es mit mindestens einem ersten Griff (4) zum Ergreifen versehen ist, der am Behälter (3) befestigt ist und massiv ausgebildet ist, wobei der umlaufende Freiraum (E) im Wesentlichen im Bereich des ersten Griffes (4) nach außen aus dem Garraum mündet.

9. Kochgerät (1) für Lebensmittel nach einem der vorhergehenden Ansprüche, **dadurch gekennzeichnet, dass** es einen zweiten Deckel umfasst, der abwechselnd mit dem ersten Deckel (2) mit dem Behälter (3) verbindbar ist, wobei der zweite Deckel und der Behälter (3) mit jeweiligen komplementären Verriegelungsmitteln versehen sind, um gemeinsam einen unter Druck setzbaren Garraum zu bilden.

## Claims

1. Cooking appliance (1) for food, comprising at least on the one hand a first lid (2) and on the other hand a pot (3) on which said first lid (2) is intended to rest freely in order to form a cooking chamber, said first lid (2) being provided with a plurality of localized projections (6A, 6B, 6C, 6D, 6E, 6F, 6G, 6H, 61) intended to come into contact with said pot (3) at respective contact areas when the first lid (2) rests freely on the pot (3), so as to provide, outside said contact areas, permanently and independently of the pressure level prevailing in the chamber, a circumferential free space (E) between said pot (3) and first lid (2) allowing steam (V) to escape from the inside of the chamber towards the outside, said circumferential free space (E) comprising at least a first circumferential portion (E1) which flares from the inside of the cooking chamber towards the outside, that is to say the spacing between the pot (3) and the first lid (2) increases from the inside of the chamber towards the outside, said plurality of projections (6A, 6B, 6C, 6D, 6E, 6F, 6G, 6H, 61) being carried by said first lid (2), said pot (3) comprising a bottom (3A), an annular side wall (3B) which rises between the bottom (3A) and an upper free rim (3C) which extends said side wall (3B) and extends laterally towards the outside of the pot (3), said first lid (2) comprising a top wall (2A) laterally delimited by a circumferential edge (20A), said top wall (2A) comprising a peripheral portion (200A) designed to rest on said upper free rim (3C) when the first lid (2) rests freely on the pot (3), said first lid (2) further comprising a skirt (2B) formed by an annular depending edge which extends from said top wall (2A) at a distance from said circumferential edge (20A), said skirt (2B) being designed to be arranged inside the pot (3) when the first lid (2) rests freely on the pot (3),
said plurality of projections comprising first and second projections (6A, 6B, 6C, 6D, 6E, 6F, 6G, 6H, 61) which protrude respectively from said peripheral portion (200A) and from said skirt (2B) so as to keep said peripheral portion (200A) and said skirt (2B) spaced apart respectively from said upper free rim (3C) and from said side wall (3B) when the first lid (2) rests freely on the pot (3).

2. Cooking appliance (1) for food according to claim 1, **characterized in that** it comprises a plurality of ribs each extending both over the peripheral portion (200A) and over the skirt (2B) so as to form both one of said first projections (6A, 6C, 6E, 6G, 61) and one of said second projections (6B, 6D, 6F, 6H).

3. Cooking appliance (1) for food according to claim 1 or 2, **characterized in that** said side wall (3B) and upper free rim (3C) respectively have a first and a second internal face (31B, 31C), while said skirt (2B) and peripheral portion (200A) respectively have an external face (22B) and a lower face (201A) intended to be located locally facing respectively said first and second internal faces (31B, 31C) when the first lid (2) rests freely on the pot (3), said first and second internal faces (31B, 31C) being connected to each other by a first curved connecting surface (7) having a first radius of curvature, while said external face (22B) and lower face (201A) are connected to each other by a second curved connecting surface (8) having a second radius of curvature which is smaller than said first radius of curvature.

4. Cooking appliance (1) for food according to any one of the preceding claims, **characterized in that** said first circumferential portion (E1) forms an upstream passage (E10) having a first cross-section and a relaxation chamber (E11) which is located downstream of said upstream passage (E10) in the direction of steam escape and into which said upstream passage (E10) opens, said relaxation chamber (E11) having a second cross-section greater than the first cross-section.

5. Cooking appliance (1) for food according to claims 3 and 4, **characterized in that** said first internal face (31B) and external face (22B) contribute to delimiting said upstream passage (E10), while said first and second connecting surfaces (7, 8) contribute to delimiting said relaxation chamber (E11).

6. Cooking appliance (1) for food according to claim 4 or 5, **characterized in that** said circumferential free space (E) comprises at least a second circumferential portion (E2) which forms a downstream passage located downstream of said relaxation chamber (E11) in the direction of steam escape and into which said relaxation chamber (E11) opens, said downstream passage having a third cross-section smaller than said second cross-section.

7. Cooking appliance (1) for food according to claims 3 and 6, **characterized in that** said second internal face (31C) and lower face (201A) contribute to delimiting said downstream passage.

8. Cooking appliance (1) for food according to any one of the preceding claims, **characterized in that** it is provided with at least a first gripping handle (4) attached to the pot (3) and having a solid shape, said circumferential free space (E) opening to the outside of the chamber substantially in line with said first gripping handle (4).

9. Cooking appliance (1) for food according to any one of the preceding claims, **characterized in that** it comprises a second lid to be associated with the pot (3) alternately with said first lid (2), said second lid and pot (3) being provided with respective complementary locking means in order together to form a cooking chamber capable of being pressurized.
